# EUROPÄISCHE PATENTSCHRIFT

(11) **EP 2 428 348 B1**
(45) Veröffentlichungstag und Bekanntmachung des Hinweises auf die Patenterteilung: **02.08.2017**
(21) Anmeldenummer: 11180304.5
(22) Anmeldetag: 07.09.2011
(51) Int. Cl.: B29C 49/42, B29C 49/64, B29C 49/06

(54) **Vorrichtung zum Behandeln von Vorformlingen - Schnellwechsel**
Pre-form - quick swap treating apparatus
Dispositif de traitement de préformes à changement rapide

(30) Priorität: 09.09.2010 DE 102010044831
(43) Veröffentlichungstag der Anmeldung: 14.03.2012
(73) Patentinhaber: Krones AG, 93073 Neutraubling (DE)
(72) Erfinder: Hüttner, Gerald, 92249 Vilseck (DE)
(74) Vertreter: Bittner, Bernhard

(56) Entgegenhaltungen:
- EP-A1- 2 253 452
- EP-A2- 1 306 194
- DE-A1- 2 057 298
- DE-A1-102006 026 885
- DE-A1-102009 005 142
- US-A- 4 351 631
- US-A- 5 869 110
- US-A1- 2009 136 613
- US-A1- 2010 159 056

## Beschreibung

Die vorliegende Erfindung bezieht sich auf eine Vorrichtung zum Behandeln von Vorformlingen, insbesondere zum Herstellen von Kunststoffbehältnissen, gemäß dem Oberbegriff des Patentanspruches 1. Aus dem Stand der Technik sind derartige Vorrichtungen und Verfahren seit langem bekannt. Dabei werden Kunststoffvorformlinge beispielsweise aus PET, welche üblicherweise kreisförmige Querschnitte aufweisen, zunächst erwärmt und anschließend innerhalb einer Blasform zu Kunststoffbehältnissen expandiert. Im Laufe dieses Expansionsvorgangs werden diese Kunststoffbehältnisse mit Druckluft beaufschlagt, um auf diese Weise gegen die Innenwandung der Blasform expandiert zu werden.

Teilweise werden im Markt jedoch Kunststoffbehältnisse gefordert, welche keinen kreisförmigen Querschnitt aufweisen, sondern einen hiervon abweichenden Querschnitt, wie beispielsweise eine ovale Grundform. Auch zum Herstellen derartiger Kunststoffbehältnisse sind aus dem Stand der Technik mehrere Verfahren bekannt. So ist es beispielsweise bekannt, dass bestimmte Bereiche der Außenwandung der Kunststoffvorformlinge stärker erwärmt werden, damit sie sich beim anschließenden Streckblasvorgang stärker ausdehnen, so dass insgesamt eine von einem kreisförmigen Querschnitt abweichende Flaschenform entsteht.

Dieser Vorgang wird im Stand der Technik auch als "preferential heating" bezeichnet.

Aus der JP 08174552 A ist eine Blasformvorrichtung bekannt. Dabei sind wärmeisolierende verstärkende Materialien eingesetzt, so dass die Form insgesamt eine Doppelstruktur aufweist. Weiterhin sind Heizeinrichtungen und Wasserlöcher für Kühlwasser vorgesehen. Die JP 63207630 A beschreibt ebenfalls eine Möglichkeit, um eine Dicke in einer Umfangsrichtung einer Flasche zu steuern. Dabei ist hier ebenfalls eine elliptische Blasform vorgesehen. Aus der US 4,380,526 ist eine Vorrichtung und ein Verfahren zum Herstellen von nichtzylindrischen Artikeln aus Vorformlingen aus PET bekannt. Dabei werden Blasformen eingesetzt, welche selbst einen elliptischen Querschnitt aufweisen. Die Oberfläche der Blasform, gegen welche das thermoplastische Material gedrängt wird, kann dabei Auswirkungen auf die Formgebung haben. Hierzu wird vorgeschlagen, ein wärmeisolierendes Material in dem Bereich, der den Behälter ausbildet, anzubringen. Dieses Teflonmaterial soll dabei den Reibungskoeffizienten mit dem Kunststoffmaterial des Kunststoffvorformlings verbessern und einen Wärmeübergang von dem Material des Vorformlings auf die Blasform reduzieren.

In der bisher noch unveröffentlichten deutschen Patentanmeldung DE 10 2009 021 792.4 der Anmelderin wurde ein Verfahren beschrieben, bei dem die Kunststoffvorformlinge mittels eines Kontaktelementes partiell berührt und auf diese Weise temperiert werden. Der Offenbarungsgehalt dieser Anmeldung wird hiermit durch Bezugnahme voll umfänglich auch zum Gegenstand der vorliegenden Anmeldung gemacht. DE-A-102006026885 offenbart eine Vorrichtung zum Behandeln von Vorformlingen gemaß dem Stand der Technik. Es werden hiermit ebenfalls die Gegenstände der von der Anmelderin am selben Tag eingereichten Patentanmeldungen, die das "Preferential Heating" zum Gegenstand haben, vollumfänglich zum Gegenstand der vorliegenden Anmeldung gemacht.

Der vorliegenden Erfindung liegt die Aufgabe zugrunde eine Vorrichtung zur Verfügung zu stellen, welche die Herstellung ovaler Behältnisse erlaubt bzw. einfacher gestaltet.

Dies wird erfindungsgemäß durch eine Vorrichtung zum Behandeln, insbesondere Temperieren, von Behältnissen, insbesondere Vorformlingen, erreicht. Diese Vorrichtung umfasst mindestens eine Aufnahmeeinrichtung zum Aufnehmen von mindestens einem Vorformling, wobei die Aufnahmeeinrichtung bevorzugt einen Vorformlinggreifer aufweist zum zumindest zeitweisen kontaktierenden Anordnen von mindestens einem Wandungsanteil des Vorformlings an mindestens einer Kontakteinrichtung, wobei mit der mindestens einen Kontakteinrichtung eine Temperatur des ersten Wandungsanteils einstellbar ist, die zumindest zeitweise von der Temperatur eines zweiten Wandungsanteils des Vorformlings, der von der Kontakteinrichtung bevorzugt stets beabstandet ist, verschieden ist, wobei die Kontakteinrichtung von einer zumindest teilweise einen Aufnahmebereich (für die Kontakteinrichtung) ausbildenden Trägereinrichtung lösbar aufgenommen ist.

Dies ist vorteilhaft, da durch das kontaktierende Anordnen auf sehr effiziente Weise der Vorformling bzw. das jeweilige Behältnis partiell temperierbar ist, wodurch wiederum die Erzeugung einer ovalen Form eines Behältnisses in vorteilhafter Weise möglich ist. Ferner weist die Vorrichtung den Vorteil auf, dass aufgrund der lösbaren Verbindung verschiedene Temperierungsprofile für verschiedene Behälter bzw. Behälterformen oder Vorformlinge vorsehbar bzw. auswechselbar sind. Derartige Vorformlinge bzw. Behältnisse bestehen bevorzugt aus Kunststoff und besonders bevorzugt aus PET.

Die Aufnahmeeinrichtung kann räumlich fest angeordnet sein, ist jedoch bevorzugt bewegbar, wenn sie beispielsweise in Form eines Rotationsförderers, Linearförderers oder Kombination daraus ausgebildet ist. Die Aufnahmeeinrichtung kann somit als eine beliebige Einrichtung zum Aufnehmen von Vorformlingen bzw. Behältnissen und somit beispielsweise als Transporteinheit ausgebildet sein.

Der Temperaturunterschied der Kontakteinrichtung im Bereich des ersten Wandungsanteils gegenüber dem zweiten Wandungsanteil ist besonders bevorzugt einstellbar.

Nach einer weiteren bevorzugten Ausführungsform der vorliegenden Erfindung weist die Trägereinrichtung mehrere äußere Aufnahmebereiche, d.h. bevorzugt einen Teil einer Oberfläche der Trägereinrichtung ausbildend, zur zumindest zeitweisen Aufnahme jeweils einer Kontakteinrichtung zum Temperieren des Wandungsanteils auf.

Als Temperieren des Wandungsanteils bzw. des kontaktierenden Wandungsanteils ist bevorzugt ein Kühlen des Wandungsanteils zu verstehen, wobei besonders bevorzugt als Kühlen ebenfalls eine lediglich geringere Wärmeeinbringung als in einem anderen Bereich, insbesondere in einem dem zweiten Wandungsbereich zugeordneten Bereich, zu verstehen ist. Somit ist die Temperierungseinrichtung bevorzugt eine Einrichtung zum Kühlen des ersten Wandungsanteils bzw. des kontaktierenden Wandungsanteils. Der erste Wandungsanteil kann sich dabei vollständig oder nur teilweise in Umfangsrichtung und/oder in Längsrichtung des Vorformlings erstrecken. Besonders bevorzugt ist der zweite Wandungsanteil flächenmäßig größer als der erste Wandungsanteil. Die Vielzahl der Aufnahmebereiche ermöglicht besonders bevorzugt eine Bewegung der einzelnen Aufnahmebereiche zueinander.

Diese Ausführungsform ist vorteilhaft, da so eine Realisierung einer einfach zu fertigenden und leicht zugänglichen Einheit aus mehreren Komponenten ermöglicht wird. Erfindungsgemäß sind die äußeren Aufnahmebereiche zumindest abschnittsweise negativ zu Oberflächenbereiche der Kontakteinrichtungen ausgebildet, wobei die Kontakteinrichtung mit einem Teil ihrer den Aufnahmebereichen zugewandten äußeren Oberfläche mit den Aufnahmebereichen in Kontakt steht und die innere Oberfläche eine Kühlkontaktkontur ausbildet. Die Kontakteinrichtung weist somit ein inneres Konturteil auf, das die Kühlkontaktkontur ausbildet, wodurch verschiedene Vorformlinge mit speziell auf die Kontur der Vorformlinge bzw. Behältnisse oder Flaschen mit angepassten Formen behandelbar sind.

Diese Ausführungsform ist vorteilhaft, da durch das flächige Zusammenwirken des äußeren Aufnahmebereichs bzw. der äußeren Aufnahmebereiche und der äußeren Oberfläche der Kontakteinrichtung eine sehr definierte bzw. präzise Anordnung und Positionierung der einzelnen Komponenten zueinander möglich ist, wodurch wiederum eine sehr hohe Prozessgenauigkeit realisierbar ist, was wiederum einen hohen Durchsatz und einen geringen Ausschuss bewirkt.

In einer weiteren bevorzugten Ausführungsform der vorliegenden Erfindung sind die äußeren Aufnahmebereiche und die Kontakteinrichtung jeweils mittels Schnellkopplungsverbindung/en miteinander koppelbar, insbesondere manuell verbindbar und/oder lösbar.

Diese Ausführungsform ist vorteilhaft, da so die Möglichkeit des schnellen Austausches der Kontakteinrichtungen gegeben ist, wodurch kein aufwendiges Umrüsten erforderlich ist. Es sind somit in kürzester Zeit und ohne den Bedarf an Fachpersonal verschiedene Kontakteinrichtungen einsetzbar bzw. die Kontakteinrichtungen austauschbar.

Gemäß einer weiteren bevorzugten Ausführungsform der vorliegenden Erfindung weisen die äußeren Aufnahmeteile zum Ausbilden der Schnellverbindungen bevorzugt jeweils einen Gleitabschnitt zum (insbesondere geradlinigen) Führen jeweils einer Positioniereinrichtung der Kontakteinrichtung in einer Gleitrichtung oder die Kontakteinrichtung weist zum Ausbilden der Schnellverbindung einen Gleitabschnitt zum Führen jeweils einer Positioniereinrichtung der äußeren Aufnahmeteile in der Gleitrichtung auf. Der Gleitabschnitt kann hierbei beispielsweise durch ein schienenartiges Zusammenwirken zweier Gleitelemente gebildet werden, wobei jeweils ein Gleitelement an der Kontakteinrichtung und ein Gleitelement an der Positioniereinrichtung, beispielsweise in Form von Nut und Feder, vorgesehen ist.

Diese Ausführungsform ist vorteilhaft, da dadurch eine sehr definierte Positionierung bzw. Fixierung der Kontakteinrichtung gegenüber der Positioniereinrichtung möglich ist.

Gemäß einer weiteren bevorzugten Ausführungsform der vorliegenden Erfindung weisen die äußeren Aufnahmeteile oder die Kontakteinrichtungen jeweils mindestens ein Fixiermittel zum Fixieren der Positioniereinrichtung auf.

Diese Ausführungsform ist vorteilhaft, da die Position der Kontakteinrichtung gegenüber der Positioniereinrichtung auf einfache Weise fixierbar ist, wodurch ein unerwünschtes Lösen der Kontakteinrichtung gegenüber der Positioniereinrichtung nicht erfolgen kann bzw. auch ein Wackeln der Kontakteinrichtung in der Positioniereinrichtung verhindert bzw. reduziert wird.

Gemäß einer weiteren bevorzugten Ausführungsform der vorliegenden Erfindung weisen die äußeren Aufnahmeteile oder die Kontakteinrichtungen mindestens jeweils zwei in Gleitrichtung zueinander beabstandete Fixiermittel zum Fixieren und/oder Positionieren der Positioniereinrichtung auf.

Diese Ausführungsform ist vorteilhaft, da so eine sehr genaue Positionierung über einen merklichen Längenanteil hervorgeht.

Gemäß einer weiteren bevorzugten Ausführungsform der vorliegenden Erfindung sind die Fixiermittel zum Fixieren im Wesentlichen rechtwinklig zur Gleitrichtung bewegbar. Dies ist vorteilhaft, da so eine sehr große Krafteinleitung bzw. Aufbringung möglich ist, wodurch sich eine starke Flächenpressung und somit ein merklicher Reibschluss zwischen der Kontakteinrichtung und der Positioniereinrichtung ergibt.

Gemäß einer weiteren bevorzugten Ausführungsform der vorliegenden Erfindung sind die Fixiermittel zum Fixieren jeweils im Bereich einer Oberfläche zum Kontaktieren der Positioniereinrichtung unterschiedlich ausgebildet.

Dies ist vorteilhaft, da so eine Funktionstrennung realisierbar ist, wodurch Einzelne der Fixiermittel eine erste Aufgabe erfüllen, während weitere der Fixiermittel eine weitere Aufgabe erfüllen. Dies ist ferner daher vorteilhaft, da Kosten gespart werden können, da nicht alle Fixiermittel mit den entsprechenden Fertigungstoleranzen bzw. Eigenschaften versehen werden müssen.

Gemäß einer weiteren bevorzugten Ausführungsform der vorliegenden Erfindung weist mindestens ein Fixiermittel zum Fixieren im Bereich der Oberfläche zum Kontaktieren der Positioniereinrichtung eine Struktur zum Erzeugen eines Formschlusses mit der Positioniereinrichtung auf.

Diese Ausführungsform ist vorteilhaft, da die Fixierung der Kontakteinrichtung in der bzw. an der Positioniereinrichtung anstelle eines Reibschlusses bzw. ergänzend zu dem Reibschluss durch einen Formschluss fixierbar ist.

Gemäß einer weiteren bevorzugten Ausführungsform der vorliegenden Erfindung ist im Bereich der Kontakteinrichtung und/oder im Bereich der äußeren Aufnahmebereiche jeweils bevorzugt mindestens ein Kanal zum Führen eines Fluids, insbesondere eines Kühlmediums, vorgesehen. Dieses Fluid ist bevorzugt eine Flüssigkeit, kann jedoch ebenfalls als ein Gas ausgeführt sein. Durch das Fluid ist bevorzugt mittels Konvektion Wärme aus der Kontakteinrichtung bzw. der Positioniereinrichtung abführbar.

Es ist jedoch ebenfalls denkbar, dass mittels dem Fluid der Kontakteinrichtung und/oder der Positioniereinrichtung Wärme zuführbar ist. Es ist zudem denkbar, dass mittels einem ersten Fluid der Positioniereinrichtung und/oder der Kontakteinrichtung Wärme zuführbar ist, während mittels einem zweiten Fluid der Positioniereinrichtung und/oder der Kontakteinrichtung Wärme entziehbar ist. Besonders bevorzugt ist ferner eine Kühleinrichtung zum Kühlen des Fluids vorgesehen.

Ferner ist denkbar, dass eine Steuereinrichtung zum Steuern des Fluidstroms, d. h. bevorzugt der Fließgeschwindigkeit, vorgesehen ist. Ferner ist denkbar, dass eine Detektionseinrichtung zum Detektieren von Vorrichtungseigenschaften oder Vorformlingseigenschaften bzw. Behältereigenschaften, wie z. B. der Temperatur, vorgesehen ist. Ebenfalls ist denkbar, dass mittels der Detektionseinrichtung eine Identifikation der einzelnen Wandungsanteile, insbesondere des ersten und zweiten Wandungsanteils, möglich ist. Ebenfalls ist vorstellbar, dass die Vorformlinge, insbesondere wenn sie von der Kontakteinrichtung zumindest abschnittsweise umschlossen sind, mittels einer Aktuatoreinrichtung, insbesondere einem Schrittmotor, um ihre Längsachse drehbar sind.

Weitere Vorteile und Ausführungsformen ergeben sich aus den beigefügten Zeichnungen. Darin zeigen:
- Fig. 1: eine dreidimensionale Vorder- und Rückansicht einer Positioniereinrichtung;
- Fig. 2: einen zweidimensionalen Querschnitt durch eine Positioniereinrichtung;
- Fig. 3: eine zweidimensionale Schnittdarstellung einer Positioniereinrichtung, in die eine Kontakteinrichtung eingeführt ist, sowie zwei Detaildarstellungen der Fixiermittel;
- Fig. 4: eine dreidimensionale Vorderansicht und eine dreidimensionale Rückansicht der Kontakteinrichtung;
- Fig. 5: eine weitere Querschnittsdarstellung der Positioniereinrichtung mit teilweise eingebrachter Kontakteinrichtung;
- Fig. 6: eine dreidimensionale Darstellung eines Teils der erfindungsgemäßen Behälterbehandlungsvorrichtung; und
- Fig. 7: eine dreidimensionale Detaildarstellung eines Ausschnitts der in Fig. 6 gezeigten erfindungsgemäßen Behälterbehandlungsvorrichtung.

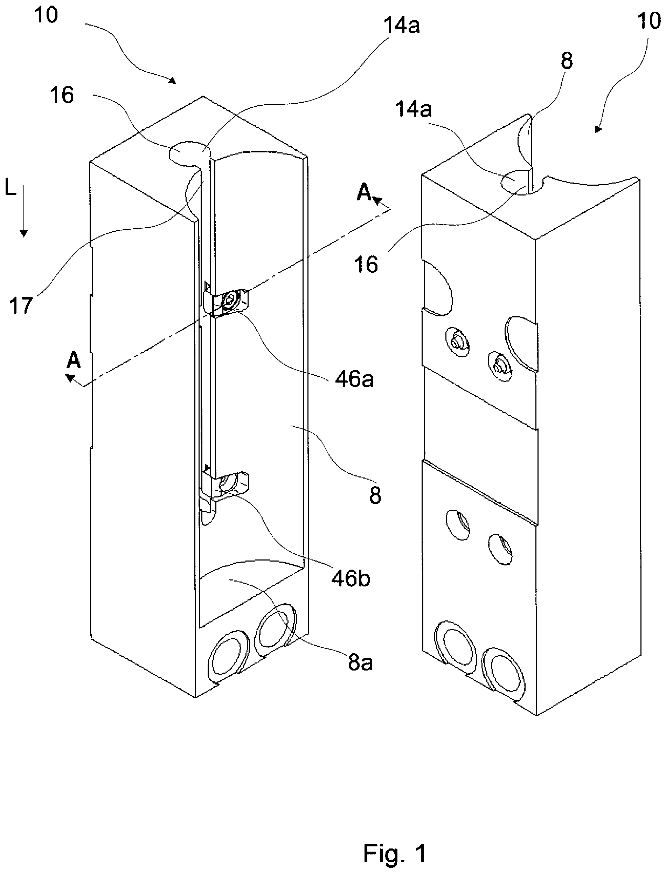

In Fig. 1 ist jeweils eine dreidimensionale Darstellung einer Vorder- und einer Rückansicht zu der erfindungsgemäßen Trägereinrichtung 10 dargestellt, die ebenfalls als Formträger bezeichnet werden kann. Es ist dieser Darstellung zu entnehmen, dass die Trägereinrichtung 10 Aufnahmebereiche 8 aufweist. Diese Aufnahmebereiche 8 sind über einen Schlitz 17 jeweils mit Schnellkopplungsverbindungen 14a, 14b verbunden. Diese Schnellkopplungsverbindungen 14a, 14b bilden jeweils einen Gleitabschnitt 16 aus, in dem jeweils ein korrespondierendes Element der Kontakteinrichtung (nicht gezeigt) entlang der Richtung L führbar ist. Mit den Bezugszeichen 46a, 46b sind Spannelemente, insbesondere Spannpratzen, gekennzeichnet, die zur Fixierung bzw. Positionierung der Kontakteinrichtung gegenüber der Trägereinrichtung 10 dienen. Die Trägereinrichtung 10 bzw. der Formträger ist ferner temperierbar und mit einem Temperaturfühler zur Regelung der Solltemperatur ausgestattet.

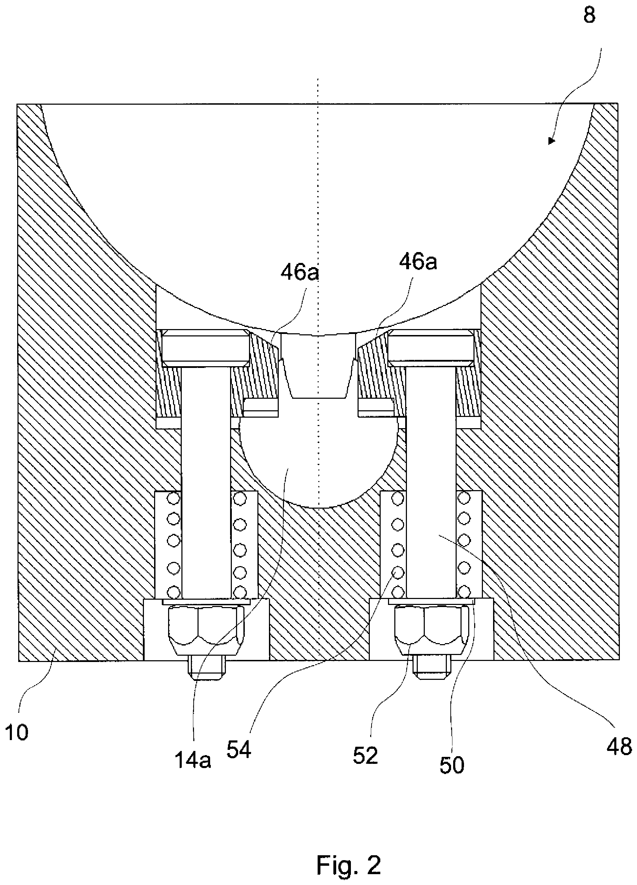

In Fig. 2 ist eine zweidimensionale Querschnittsdarstellung der in Fig. 1 gezeigten Trägereinrichtung 10 im Bereich des Schnittes "A" dargestellt. Dieser Darstellung ist wiederum der Aufnahmebereich 8 und die Schnellkopplungsverbindung 14a zu entnehmen. Ferner sind Spannbolzen 48 zum Spannen bzw. Klemmen der Spannpratzen 46a dargestellt. Die Spannbolzen 48 sind mittels Federelementen 54, die bevorzugt als Spiralfedern (insbesondere als Druckfedern) ausgebildet sind, Unterlegscheiben 50 und/oder Muttern 52 mit einer Federkraft beaufschlagbar. Die Spannpratzen 46a sind somit bevorzugt mit den Federelementen 54 vorgespannt bzw. vorspannbar und liegen besonders bevorzugt mit der Unterseite in der Trägereinrichtung 10 bzw. im Formträger auf. Somit ist bei einer Aufnahme der Kontakteinrichtung 6 ein Einspannen bzw. Fixieren der Kontakteinrichtung 6 in der Trägereinrichtung 10 auf einfache Weise möglich.

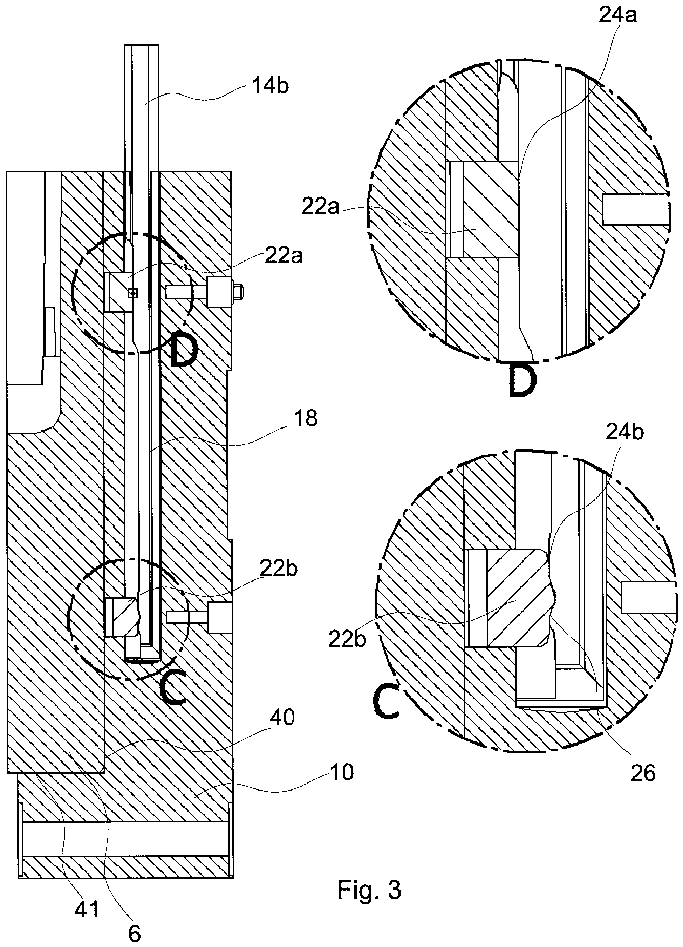

In Fig. 3 ist wiederum eine zweidimensionale Darstellung der Trägereinrichtung 10 dargestellt. In dieser Darstellung lässt sich zudem ein Teil einer über die Schnellkopplungsverbindung 14b teilweise gekoppelten Kontakteinrichtung 6 entnehmen. Die Kontakteinrichtung 6 weist bevorzugt eine Positioniereinrichtung 18, insbesondere einen Nutenstein, auf.

Die mit "C" und "D" gekennzeichneten Bereiche sind jeweils in Ausschnittsdarstellungen vergrößert dargestellt. Es sind in diesen Ausschnittsdarstellungen jeweils Fixiermittel 22a, 22b zu entnehmen. Die Fixiermittel 22a, 22b weisen jeweils Oberflächen zum Kontaktieren 24a, 24b auf, mit denen sie mit dem Nutenstein 18 der Schnellkopplungsverbindung 14b der Kontakteinrichtung 6 in Kontakt stehen bzw. in Kontakt bringbar sind.

Es ist den Ausschnittsdarstellungen "C" und "D" ferner zu entnehmen, dass die Oberflächen zum Kontaktieren 24a, 24b unterschiedlich ausgestaltet sind. So weist die Oberfläche 24a beispielsweise lediglich eine glatte Struktur auf, während die Struktur 26 der Oberfläche 24b rau bzw. wellig und insbesondere formschlussgenerierend ausgebildet ist. Durch das Bezugszeichen 40 ist bevorzugt ein Außenradius bzw. eine äußere Oberfläche der Kontakteinrichtung 6 gekennzeichnet.

Die Spannpratzen 46a, 46b bzw. Fixiermittel 22a, 22b sind bevorzugt so gestaltet, dass diese erst unmittelbar vor dem Verriegeln mit dem Nutenstein 18 in Kontakt kommen. Beim Herunterdrücken der Kontakteinrichtung 6 zum Koppeln mit der Positioniereinrichtung 10 wird die Spannpratze 22b durch die Schräge und den Radius des Nutensteins überdrückt und bewegt sich nach hinten, durch weiteres Niederdrücken schnappt die Spannpratze 22b in den Radius des Nutensteins 18 ein. Die Kontur der Spannpratze 22b ist so ausgelegt, dass ein selbstständiges Loslösen verhindert wird. Es entsteht ein Kontakt mit der Stirnfläche 41 an der Auflagefläche 8a im Formträger, wodurch die Endlage definiert wird.

Die Spannpratze 22a bzw. das Fixiermittel 22a drückt ebenfalls auf den Nutenstein 18, wodurch die Prägeplatte auch im oberen Bereich gespannt wird. Im angespannten Zustand liegt somit die Kontakteinrichtung 6 über ihre Stirnfläche 42 definiert am Aufnahmebereich 8 des bevorzugt temperierten Formträgers 10 an, wodurch eine Wärmeübertragung vom Formträger 10 auf die Kontakteinrichtung 6 gewährleistet wird.

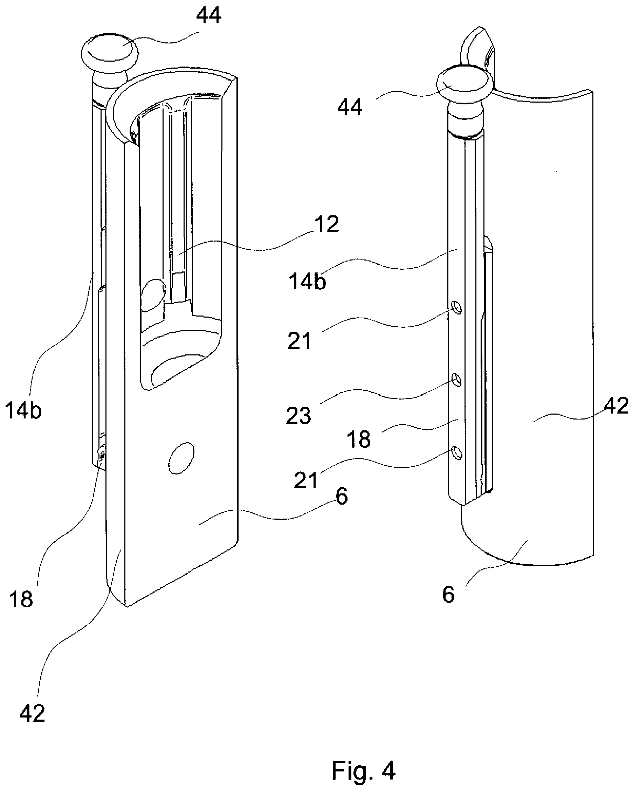

Der Fig. 4 sind zwei dreidimensionale Darstellungen der Kontakteinrichtung 6 zu entnehmen. Die in Fig. 4 links abgebildete dreidimensionale Darstellung der Kontakteinrichtung 6 zeigt die innere Oberfläche der Kontakteinrichtung 6 und somit die Kühlkontaktkontur 12. Erfindungsgemäß erstreckt sich die Kühlkontaktkontur 12, wie in Fig. 4 dargestellt, geradlinig oder kurvenförmig oder abschnittsweise kurvenförmig und einen Wandungsbereich des Vorformlings berührt. Vorzugsweise besteht die Kühlkontaktkontur 12 wahlweise aus einem wärmeleitenden bzw. wärmeisolierenden Material, um Wärme aus zumindest einem Wandungsanteil des Vorformlings 2 abzuführen bzw. einem Wandungsanteil gezielt Wärme zuzuführen. Bevorzugt wird zur besseren Wärmeleitung als Material für die Kühlkontaktkontur 12 Aluminium bzw. zur besseren Wärmeisolierung Teflon vorgesehen sein. In einer weiteren vorteilhaften Ausführung ist die Kühlkontaktkontur 12 in Form eines Verbundteils vorgesehen.

So wäre es denkbar, dass eine Kühlkontaktkontur aus einem wärmeleitenden Material besteht und eine weitere Kühlkontaktkontur aus einem wärmeisolierenden Material besteht. Auch wäre es möglich, dass eine Kühlkontaktkontur Bereiche aufweist, welche aus einem wärmeleitenden Material bestehen, um Wärme aus einem Wandungsteil des Vorformlings 2 abzuführen sowie auch Bereiche, welche aus einem wärmeisolierenden Material bestehen, um einem Wandungsteil des Vorformlings 2 Wärme zuzuführen.

Die Schnellkopplungsverbindung 14b, die an der Stirnfläche 42 der Kontakteinrichtung 6 angeordnet ist, ist beispielsweise als Positioniereinrichtung 18, insbesondere als Nutenstein, ausgeführt. Die Bezugszeichen 21 kennzeichnen Schraubverbindungen, mittels denen die Schnellkopplungsverbindung 14b mit der Stirnfläche 42 bzw. dem Wandungselement der Kontakteinrichtung 6 verbunden ist. Durch das Bezugszeichen 23 ist ein Stift, insbesondere ein Positionierstift, gekennzeichnet.

Der Griff 44 stellt ein Mittel zum Kraftaufbringen auf die Kontakteinrichtung 6 dar. So kann mittels diesem Griff 44 eine Löse- bzw. Fixierkraft auf die Kontakteinrichtung 6 aufgebracht werden. Die Kontakteinrichtung 6 bzw. Prägeplatte 6 ist jeweils für eine Flaschenkontur und Preformgeometrie ausgelegt, wodurch für einen Sortenwechsel und zur Reduzierung der Rüstzeit die Kontakteinrichtung 6 schnellwechselbar und einfach ausgeführt ist.

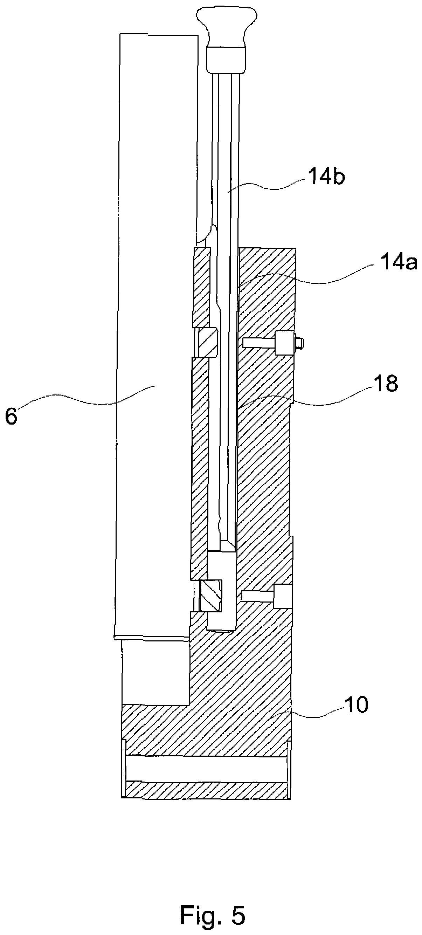

Fig. 5 entspricht im wesentlichen Fig. 3, wobei die Schnellkopplungsverbindungen 14b der Kontakteinrichtung 6 noch nicht vollständig mit der Schnellkopplungsverbindung 14a der Trägereinrichtung 10 zusammenwirken.

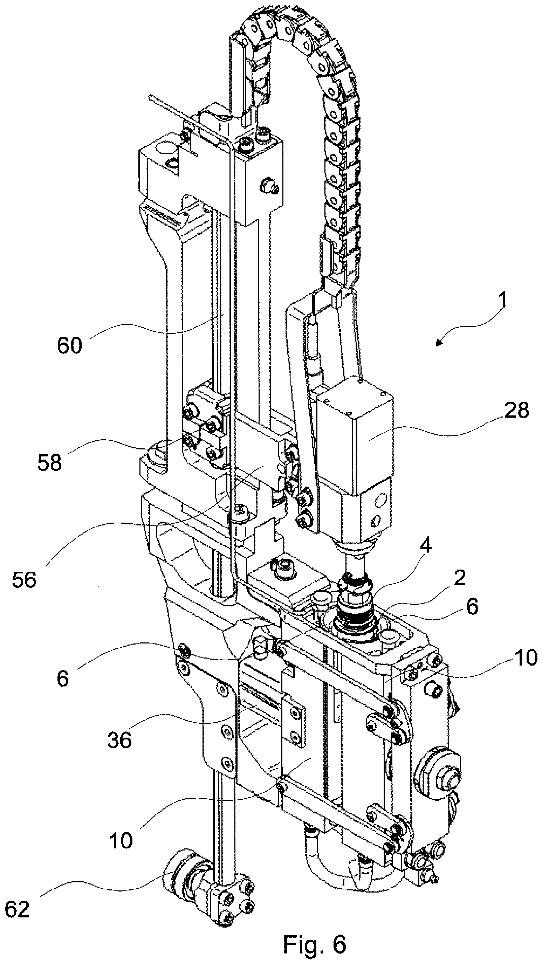

In Fig. 6 ist ein Teil der Vorrichtung 1 zum Behandeln von Behältnissen in einer dreidimensionalen Darstellung abgebildet. Die Abbildung zeigt eine Vielzahl miteinander in Verbindung stehender Einrichtungen sowie die Zuführung eines Vorformlings 2 mittels einer Aufnahmeeinrichtung 4, insbesondere einen Preformgreifer, in die Kontakteinrichtung 6, die wiederum von den Trägereinrichtungen 10 umgeben ist. Der Preformgreifer 4 ist mit einem Schrittmotor 28 verbunden, der mit einem Ausleger 56, einer Kupplung 58, insbesondere einer Rutschkupplung und einem Mittel zum Zwangsführen 60, insbesondere einer Keilwelle, verbunden ist und mit einer Steuerkurvenkomponente 62, insbesondere einer auf einer Steuerkurve ablaufenden Rolle, in Vorformlinglängsrichtung verschiebbar ist.

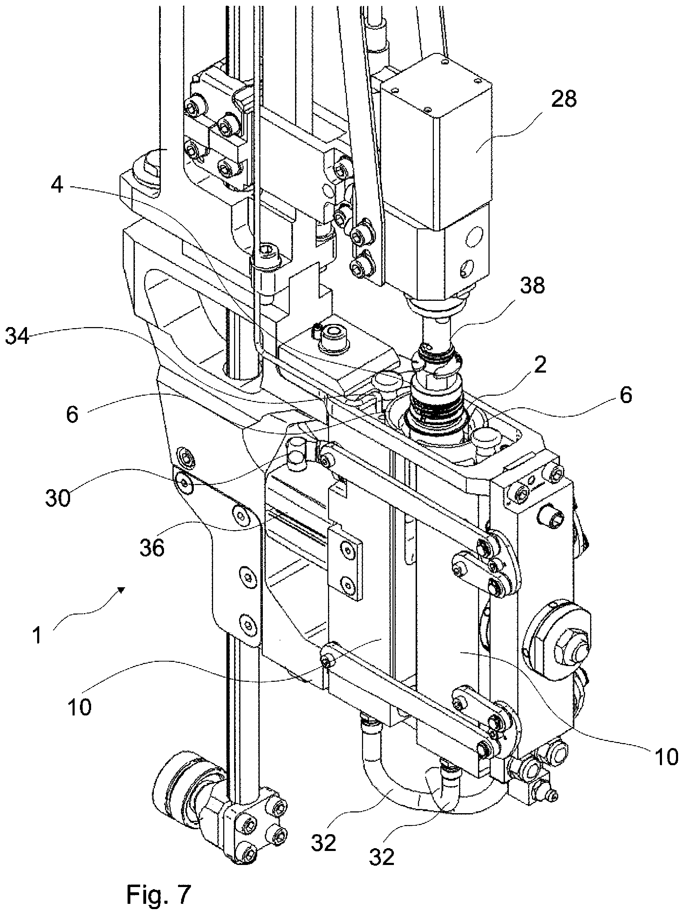

In Fig. 7 ist eine vergrößerte dreidimensionale Darstellung eines Teils der bereits in Fig. 6 abgebildeten Behandlungseinrichtung 1 dargestellt. Dieser Figur sind ein bzw. mehrere zusätzliche Anschlüsse 30 zur Einbringung eines Temperiermediums in den Träger 10 sowie Umlenkelemente 32 zum Umlenken des Temperiermediums zu entnehmen. Die Umlenkelemente können dabei die einzelnen Trägereinrichtungen 10 und/oder die Kontakteinrichtung 6 jeweils fluidmäßig miteinander verbinden.

Durch das Bezugszeichen 34 ist ein Thermofühler und somit eine Detektoreinheit gekennzeichnet. Der Thermofühler 34 kann beispielsweise zur Ermittlung der Fluidtemperatur, der Temperatur der Trägereinrichtung 10 der Kontakteinrichtung 6 und/oder der Temperatur des Vorformlings 2 dienen. Es ist ebenso denkbar, dass weitere Detektionseinrichtungen, beispielsweise zum Erfassen der Position des Vorformlings 2 und/oder zur Ermittlung von Umgebungsbedingungen, wie beispielsweise der Luftfeuchtigkeit, dem Druck, oder Ähnlichem vorgesehen sind.

Der Preformgreifer 4 kann beispielsweise über einen Bajonettverschluss gehalten werden. Beim Wechsel wird der Preformgreifer 4 bevorzugt durch Drehen gegen den Uhrzeigersinn aus der Aufnahme 38 gedreht. Der Schrittmotor 28 kann beim Wechsel mit Strom beaufschlagt werden, um die Spindel in der Stellung zu halten.

Mit dem Bezugszeichen 36 ist ein Zylinder bzw. ein weiterer Schrittmotor gekennzeichnet, durch den beispielsweise eine Bewegung der Trägereinrichtung 10 zueinander bewirkbar ist.

### Bezugszeichenliste

- 1: Vorrichtung
- 2: Vorformling, Preform
- 4: Aufnahmeeinrichtung, Preformgreifer
- 6: Kontakteinrichtung, Prägeplatte
- 8: Aufnahmebereich
- 8a: Auflagefläche
- 10: Trägereinrichtung, Formträger
- 12: Kühlkontaktkontur, Innenkontur
- 14a/14b: Schnellkopplungsverbindung
- 16: Gleitabschnitt
- 17: Schlitz
- 18: Positioniereinrichtung, Nutenstein
- 21: Befestigungsschrauben
- 22a/22b: Fixiermittel
- 23: Stift
- 24a/24b: Oberfläche zum Kontaktieren
- 26: Struktur
- 28: Schrittmotor
- 30: Anschlüsse Temperiermedium
- 32: Umlenkung Temperierung
- 34: Thermofühler
- 36: Zylinder/Schrittmotor
- 38: Aufnahme
- 40: Außenradius
- 41: Stirnfläche
- 42: Stirnfläche
- 44: Griff
- 46a/46b: Spannpratze
- 48: Spannbolzen
- 50: Scheibe
- 52: Mutter
- 54: Druckfeder
- 56: Ausleger
- 58: Kupplung
- 60: Mittel zum Zwangsführen
- 62: Steuerkurvenkomponente
- L: Richtung

## Patentansprüche

1. Vorrichtung (1) zum Behandeln von Vorformlingen (2), mindestens umfassend
eine Aufnahmeeinrichtung (4) zum Aufnehmen von mindestens einem Vorformling (2) und zum zumindest zeitweisen kontaktierenden Anordnen von mindestens einem Wandungsanteil des Vorformlings (2) an mindestens einer Kontakteinrichtung (6), wobei mit der mindestens einen Kontakteinrichtung (6) eine Temperatur des ersten Wandungsanteils vorgebbar ist, die zumindest zeitweise von der Temperatur eines zweiten Wandungsanteils des Vorformlings (2), der von der Kontakteinrichtung (6) stets beabstandet ist, verschieden ist, wobei die Kontakteinrichtung (6) von einer einen Aufnahmebereich (8) für die Kontakteinrichtung (6) ausbildenden Trägereinrichtung (10) lösbar aufgenommen ist, wobei die äußeren Aufnahmebereiche (8) zumindest abschnittsweise negativ zu den Kontakteinrichtungen (6) ausgebildet sind, wobei die Kontakteinrichtung (6) mit einem Teil ihrer den Aufnahmebereichen (8) zugewandten äußeren Oberfläche mit den Aufnahmebereichen in Kontakt stehen und die innere Oberfläche der Kontakteinrichtung (6) eine Kühlkontaktkontour (12) ausbildet, und wobei die Kühlkontaktkontour (12) sich geradlinig erstreckt oder kurvenförmig oder abschnittsweise kurvenförmig erstreckt, und dazu eingerichtet und dafür vorgesehen ist, einen Wandungsbereich des Vorformlings (2) zu berühren.

2. Vorrichtung nach Anspruch 1,
**dadurch gekennzeichnet, dass**
die Trägereinrichtung (10) mehrere äußere Aufnahmebereiche (8) zur zumindest zeitweisen Aufnahme jeweils einer Kontakteinrichtung (6) zum Temperieren des Wandungsanteils aufweist.

3. Vorrichtung nach einem der vorangegangenen Ansprüche,
**dadurch gekennzeichnet, dass**
die äußeren Aufnahmebereiche (8) und die Kontakteinrichtungen (6) jeweils mittels Schnellkopplungsverbindungen (14a, 14b) miteinander koppelbar sind.

4. Vorrichtung nach Anspruch 3,
**dadurch gekennzeichnet, dass**
die äußeren Aufnahmeteile (8) zum Ausbilden der Schnellverbindung (14a, 14b) einen Gleitabschnitt (16) zum Führen jeweils einer Positioniereinrichtung (18) der Kontakteinrichtungen (6) in einer Gleitrichtung oder die Kontakteinrichtungen (6) zum Ausbilden der Schnellverbindung (14) einen Gleitabschnitt zum Führen jeweils einer Positioniereinrichtung (18) der äußeren Aufnahmeteile (8) in der Gleitrichtung aufweisen.

5. Vorrichtung nach Anspruch 4,
**dadurch gekennzeichnet, dass**
die äußeren Aufnahmeteile (8) oder die Kontakteinrichtungen (6) jeweils mindestens ein Fixiermittel zum Fixieren der Positioniereinrichtung (18) aufweisen.

6. Vorrichtung nach Anspruch 5,
**dadurch gekennzeichnet, dass**
die äußeren Aufnahmeteile (8) oder die Kontakteinrichtungen (6) mindestens jeweils zwei in Gleitrichtung zueinander beabstandete Fixiermittel (22a, 22b) zum Fixieren und/oder Positionieren der Positioniereinrichtung (18) aufweisen.

7. Vorrichtung nach Anspruch 5 oder 6,
**dadurch gekennzeichnet, dass**
die Fixiermittel (22a, 22b) zum Fixieren im Wesentlichen rechtwinklig zur Gleitrichtung bewegbar sind.

8. Vorrichtung nach Anspruch 5 bis 7,
**dadurch gekennzeichnet, dass**
die Fixiermittel (22a, 22b) zum Fixieren jeweils im Bereich einer Oberfläche zum Kontaktieren (24) der Positioniereinrichtung (18) unterschiedlich ausgebildet sind.

9. Vorrichtung nach Anspruch 5 bis 8,
**dadurch gekennzeichnet, dass**
mindestens ein Fixiermittel (22a, 22b) zum Fixieren im Bereich der Oberfläche zum Kontaktieren (24) der Positioniereinrichtung (18) eine Struktur zum Erzeugen eines Formschlusses mit der Positioniereinrichtung (18) aufweist.

10. Vorrichtung nach einem der vorangegangenen Ansprüche,
**dadurch gekennzeichnet, dass**
im Bereich der Kontakteinrichtung (6) und/oder im Bereich der äußeren Aufnahmebereiche (8) jeweils mindestens ein Kanal (26) zum Führen eines Fluids vorgesehen ist.

## Claims

1. Device (1) for processing preforms (2), comprising at least a holder device (4) for holding at least one preform (2) and for at least partial contacting arrangement of at least one wall part of the preform (2) on at least one contact device (6), wherein by the at least one contact device (6) a temperature of the first wall part can be prespecified which at least temporarily differs from the temperature of a second wall part of the preform (2) that is always spaced from the contact device (6), wherein the contact device (6) isheld releasably by a carrier device (10) forming a holding zone (8) for the contact device (6), wherein the outer holding zone (8) at least in sections are formed negatively to the contact device (6), wherein the contact device (6) is in contact with the holding zones with part of its outer surface facing the holding zones (8), and the inner surface of the contact device (6) forms a cooling contact contour (12), and wherein the cooling contact contour extends linearly or curve-shaped or section-wise in a curveshape and is adapted and arranged to contact a wall region of the preform (2).

2. Device according to claim 1,
**characterised in that**
the carrier device (10) comprises several outer holding zones (8) each for holding at least temporarily a contact device (6) for tempering the wall part.

3. Device according to any of the preceding claims,
**characterised in that**
the outer holding zones (8) and the contact devices (6) can each be coupled together by means of fast coupling connections (14a, 14b).

4. Device according to claim 3,
**characterised in that**
to form the fast connection (14a, 14b), the outer holding parts (8) each comprise a sliding section (16) to guide a positioning device (18) of the contact devices (6) in a slide direction, or to form the fast connection (14) the contact devices (6) each comprise a sliding section to guide a positioning device (18) of the outer holding parts (8) in the slide direction.

5. Device according to claim 4,
**characterised in that**
the outer holding parts (8) or the contact devices (6) each comprise at least one fixing means for fixing the positioning device (18).

6. Device according to claim 5,
**characterised in that**
the outer holding parts (8) or the contact devices (6) each comprise at least two fixing means (22a, 22b) spaced apart in the slide direction for fixing and/or positioning the positioning device (18).

7. Device according to claim 5 or 6,
**characterised in that**
the fixing means (22a, 22b) for fixing can be moved substantially at right angles to the slide direction.

8. Device according to claims 5 to 7,
**characterised in that**
the fixing means (22a, 22b) for fixing are each formed differently in the area of a surface for contacting (24) the positioning device (18).

9. Device according to claims 5 to 8,
**characterised in that**
at least one fixing means (22a, 22b) for fixing, in the area of a surface for contacting (24) the positioning device (18), comprises a structure to create a form fit connection with the positioning device (18).

10. Device according to any of the preceding claims,
**characterised in that**
in the area of the contact device (6) and/or in the area of the outer holding zones region (8) at least one channel (26) is provided to guide a fluid.

## Revendications

1. Système (1) de traitement d'ébauches (2), comprenant au moins un dispositif de réception (4) destiné à recevoir au moins une ébauche (2) et à agencer en contact au moins temporaire au moins une partie de paroi de l'ébauche (2) sur au moins un dispositif de mise en contact (6), dans lequel ledit au moins un dispositif de mise en contact (6) permet de prédéfinir une température de la première partie de paroi qui est au moins temporairement différente de la température d'une deuxième partie de paroi de l'ébauche (2) qui est constamment distante du dispositif de mise en contact (6), dans lequel le dispositif de mise en contact (6) est reçu de manière détachable par un dispositif de support (10) constituant une zone de réception (8) pour le dispositif de mise en contact (6), dans lequel les zones extérieures de réception (8) sont formées au moins en partie de manière négative par rapport aux dispositifs de mise en contact (6), dans lequel le dispositif de contact (6),par une partie de sa surface extérieure tournée vers les zones de réception (8), est en contact avec les zones de réception et la surface intérieure du dispositif de contact (6) constituant un contour de contact de refroidissement (12), et dans lequel le contour de contact de refroidissement (12) s'étend de manière rectiligne ou s'étend de manière curviligne ou en partie de manière curviligne, et est configuré et conçu pour toucher une zone de paroi de l'ébauche (2).

2. Système selon la revendication 1,
**caractérisé en ce que**
le dispositif de support (10) comprend plusieurs zones de réception (8) extérieures destinées à recevoir au moins temporairement chaque dispositif de mise en contact (6) pour la thermorégulation de la partie de paroi.

3. Système selon l'une quelconque des revendications précédentes,
**caractérisé en ce que**
les zones de réception extérieures (8) et les dispositifs de mise en contact (6) peuvent être raccordés chacun les uns aux autres au moyen de liaisons à raccordement rapide (14a, 14b).

4. Système selon la revendication 3,
**caractérisé en ce que**
les parties extérieures de réception (8), pour constituer la liaison rapide (14a, 14b), présentent une partie coulissante (16) destinée à guider respectivement un dispositif de positionnement (18) des dispositifs de mise en contact (6) dans un sens de coulissement, ou les dispositifs de mise en contact (6), pour constituer la liaison rapide (14), présentent une partie coulissante destinée à guider respectivement un dispositif de positionnement (18) des parties extérieures de réception (8) dans le sens de coulissement.

5. Système selon la revendication 4,
**caractérisé en ce que**
les parties extérieures de réception (8) ou les dispositifs de mise en contact (6) présentent respectivement au moins un moyen de fixation pour la fixation du dispositif de positionnement (18).

6. Système selon la revendication 5,
**caractérisé en ce que**
les parties extérieures de réception (8) ou les dispositifs de mise en contact (6) comprennent au moins respectivement deux moyens de fixation (22a, 22b) espacés les uns des autres dans le sens de coulissement et destinés à fixer et/ou à positionner le dispositif de positionnement (18).

7. Système selon la revendication 5 ou 6,
**caractérisé en ce que**
les moyens de fixation (22a, 22b) permettant la fixation sont mobiles sensiblement perpendiculairement au sens de coulissement.

8. Système selon la revendication 5 à 7,
**caractérisé en ce que**
les moyens de fixation (22a, 22b) permettant une fixation respectivement dans la région d'une surface pour la mise en contact (24) du dispositif de positionnement (18) présentent une configuration différente.

9. Système selon la revendication 5 à 8,
**caractérisé en ce que**
au moins un moyen de fixation (22a, 22b) permettant une fixation dans la région de la surface pour la mise en contact (24) du dispositif de positionnement (18) présente une structure destinée à produire une coopération de formes avec le dispositif de positionnement (18).

10. Système selon l'une quelconque des revendications précédentes,
**caractérisé en ce que**
respectivement au moins un canal (26) destiné à guider un fluide est prévu dans la région du dispositif de mise en contact (6) et/ou dans la région des zones extérieures de réception (8).
